# EUROPÄISCHE PATENTANMELDUNG

(11) **EP 2 660 224 A1**
(43) Veröffentlichungstag der Anmeldung: **06.11.2013**
(21) Anmeldenummer: 11852774.6
(22) Anmeldetag: 22.12.2011
(51) Int. Cl.: C04B 41/61, C04B 111/27

(54) **WASSERDICHTE ZUSAMMENSETZUNG**

(30) Priorität: 28.12.2010 UA 2010015843
(71) Anmelder: Mischenko, Valentyn Nikolayevich, Kiev 01021 (UA); Lykhoded, Yuriy Anatolevich, Alushta, Avtonomnaja Respublika Krym 98500 (UA); Melnik, Stefaniya Stefanovna, Ivano-Frankovskaja obI. 77300 (UA); Shimanskiy, Arkadiy Petrovich, Kiev 04136 (UA)
(72) Erfinder: Mischenko, Valentyn Nikolayevich, Kiev 01021 (UA); Lykhoded, Yuriy Anatolevich, Alushta, Avtonomnaja Respublika Krym 98500 (UA); Melnik, Stefaniya Stefanovna, Ivano-Frankovskaja obI. 77300 (UA); Shimanskiy, Arkadiy Petrovich, Kiev 04136 (UA)
(74) Vertreter: Jeck, Anton
(86) Internationale Anmeldenummer: PCT/UA2011/000126
(87) Internationale Veröffentlichungsnummer: WO 2012/091688

(57) **Zusammenfassung**

Die Erfindung ist im Bauwesen einsetzbar und ist dafür vorgesehen, wasserabstoßende Eigenschaften zahlreichen Bau- und anderen Stoffen wie allen Betonsorten, Schaumbeton, Gasbeton, rotem Ziegel und Kalksandstein, Fliesen, Zementfaserplatten, Natur- und Kunststein, Zement-Sand-Mörtel, Schiefer, Blähtonbeton, Gips, Gipskarton sowie Leder, Webstoffen, Papier, Holz und anderen Materialien zu verleihen. Dabei werden Festigkeit und wärmedämmende Eigenschaften, Rissbeständigkeit und Frostsicherheit der Baustoffe und anderer Materialien verbessert. Die Erfindung weist eine Zusammensetzung auf, welche wenigstens eine der folgenden Verbindungen - Polymethylhydrosiloxan, Polyethylhydrosiloxan, Polymethylsiloxan, Methyltriethoxysilan, Aminopropyltriethoxysilan und/oder wenig-stens eine der folgenden Verbindungen - Natrium- oder Kalium-Methylsiliconat, Natriumoder Kalium-Ethylsiliconat oder wenigstens eine der folgenden Verbindungen - Natrium-Alumomethylsiliconat, Natrium-Alumoethylsiliconat als siliziumorganische Verbindung aufweist. Zusätzlich weist sie als Füllstoff nanodisperses Kieselerde- oder Tonerde-Pulver oder durch organische Verbindungen der monomerischen Alkylchlorosilane modifiziertes Kieselerde-Nanopulver und als Lösungsmittel Wasser und/oder organisches Lösungsmittel der aliphatischen und aromatischen Kohlenwasserstoffgruppe auf, wobei die Masse folgendes Komponentenverhältnis aufweist (Mass. %):

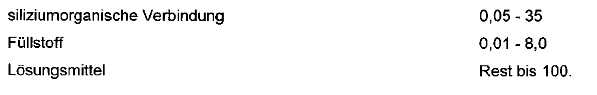

## Beschreibung

Die Erfindung betrifft eine wasserabweisende Masse nach dem Oberbegriff des Anspruchs.

Die Erfindung ist im Bauwesen einsetzbar und ist dafür vorgesehen, wasserabstoßende Eigenschaften zahlreichen Bau- und anderen Stoffen zu verleihen. Es handelt sich dabei um alle Betonsorten, Schaumbeton, Gasbeton, roter Ziegel und Kalksandstein, Fliesen, Zementfaserplatten, Natur- und Kunststein, Zement-Sand-Mörtel, Schiefer, Blähtonbeton, Gips, Gipskarton sowie Leder, Webstoffe, Papier, Holz und andere Materialien. Dabei werden Festigkeit und wärmedämmende Eigenschaften, Rissbeständigkeit, Frostsicherheit der Baustoffe und anderer Materialien verbessert.

In der Industrie ist die Verwendung von siliziumorganischen Verbindungen (Silikon) als wasserabweisende Stoffe bekannt. Im Bauwesen werden z. B. siliziumorganische Flüssigkeiten wie Methylsiliconate und Ethylsiliconate der Alkalimetalle Kalium oder Natrium in Form von 30%igen alkoholisch-wässrigen Lösungen sowie ihren wasser-löslichen Pulvern weit verwendet.

Aus dem Stand der Technik ist auch die Verwendung von Natriumalumomethyl- und -alumoethylsiliconaten in Form von Wasserlösung bzw. ihren Trockenpulvern bekannt. Diese Komponenten werden z. B. als Oberflächenbeschichtung verschiedener Materialien verwendet. Jedoch werden beim Einsatz dieser Komponenten Salze, wie z. B. Na₂CO₃, sowie Kristallhydrate gebildet. Das vermindert wesentlich den hydrophoben Effekt des Films auf der Materialoberfläche. Alkalische Eigenschaften von Alkylsilikaten der Alkalimetalle wie Natrium oder Kalium begrenzen ihre Anwendung als Hydrophobiermittel für zahlreiche Materialien. Ein Zurückgehen der Alkalität dieser Komponenten verursacht eine Bildung von unlöslichen Salzen, z. B. Natrium-Polyalkylsilikaten, die ausfallen. Diese Mängel von flüssigen Natrium- oder Kalium-Alkylsilikaten beschränken wesentlich ihren Anwendungsbereich.

Die am meisten verwendeten Komponenten von wasserabweisenden Massen auf der Basis von flüssigen und emulsionsartigen Polyalkylhydrosiloxanen sind Polymethylhydrosiloxan und Polyethylhydrosiloxan. Um jedoch einen qualitätsgerechten hydrophoben Schutz des Materials zu erreichen, ist eine Wärmebehandlung der Erzeugnisse in einem Temperaturbereich von 50 - 100 °C erforderlich. Das begrenzt ebenfalls den Anwendungsbereich dieser Komponenten. Der Einsatz anderer Polysi-loxane sieht auch eine Wärmebehandlung der Erzeugnisse bei einer Temperatur bis zu 300 °C vor.

Durch das Patent 1498741 (IPC C04B 41/64 SU) ist eine wasserabweisende Masse bekannt, die wässrige Emulsion eines 10- bis 15%igen Polyethylhydridsiloxans als siliziumorganische Flüssigkeit und 1- bis 2%ige Orthophosphorsäure aufweist.

Der Mangel der beschriebenen Masse besteht darin, dass sich eine hydrophobe Schicht langsam bildet und den Erzeugnissen hydrophobe Eigenschaften erst nach 2 - 7 Tagen bei einer Temperatur von 10 - 20 °C verleiht. Darüber hinaus weist diese Masse 1- bis 2%ige Orthophosphorsäure auf, die die hydrophoben Eigenschaften beeinträchtigt.

Der der Erfindung nächstkommende Stand der Technik ist eine Masse zur Hydrophobierung von Silikatbaustoffen, die als Prototyp zu betrachten ist. Sie weist eine siliziumorganische Flüssigkeit, Orthophosphorsäure und Wasser sowie Natrium-Hexafluorosilikat, Talk und Aluminiumoxid auf. Bei der siliziumorganischen Flüssigkeit handelt es sich um ein Natrium-Methylsiliconat. Die Masse setzt sich im folgenden Verhältnis zusammen (Gew.%):

| | |
|---|---|
| Natrium Methylsiliconat | 10 - 15 |
| Natrium Hexafluorosilikat | 0,8- 1,2 |
| Orthophosphorsäure | 0,2 - 0,25 |
| Talk | 0,15 - 0,25 |
| Aluminiumoxid | 0,25 - 0,5 |
| Wasser | Rest. |

(Patent 2273623 RU 7 C04B 41/61).

Natrium-Methylsiliconat hat zwar hydrophobe Eigenschaften. Aber der für die bekannte Zusammensetzung angegebene Anteil in Kombination mit den anderen Zutaten in dieser bekannten Masse bewirkt keinen hohen hydrophoben Effekt. Dies wird als Mangel des Prototyps betrachtet. Als Katalysator wird in dieser bekannten Masse Orthophosphorsäure verwendet. Sie verlangsamt die Herstellung einer hydrophoben Schicht und bildet unlösliche Salze an den Oberflächen der anorganischen Stoffe. Das verringert grundsätzlich den wasserabweisenden Effekt der Zusammensetzung. Darüber hinaus sieht die bekannte Masse ein kompliziertes Zubereitungsverfahren vor und setzt somit einen hohen Stromverbrauch sowie Arbeitsaufwand voraus. Darüber hinaus ist dieses Verfahren zeitraubend: Die Massenzubereitung läuft in zwei Schritten im Laufe von 36 Stunden ab. Die Gebrauchswerte sind dabei nicht hoch. Außerdem ist diese Masse kein Mehrzweckerzeugnis, denn sie kann nur bei der Betonherstellung verwendet werden.

Es ist Aufgabe der Erfindung,
- eine hochwirksame Masse zu entwickeln, bei der ihre Zusammensetzung so verändert ist, dass die Bindungen zwischen den reaktiven Funktionsgruppen ihrer Komponenten und die reaktiven Funktionsgruppen des behandelten Materials (seiner Teilchen, Poren, Kapillaren usw.) vergrößert und verstärkt sind,
- die Schichtdichte von chemosorbierten Komponenten der wasserabweisenden Masse bei ihrer Anwendung zu vergrößern und zu erhöhen, um dadurch ihre Funktionalitäten zu erweitern,
- Materialien bzw. Oberflächen mit hohen hydrophoben Eigenschaften herzustellen und ihre Festigkeit und Plastifizierungseigenschaften zu verbessern.

Darüber hinaus sollen die Zubereitung und die Verwendung der Masse vereinfacht und verbilligt sowie der Arbeitsaufwand und die Wartezeit bis zur Entstehung der hydrophoben Schicht vermindert werden. Es sind auch andere Gebrauchswerte der behandelten Materialien wie Dauerhaftigkeit, Frostsicherheit, Korrosionsbeständigkeit usw. zu verbessern.

Die gestellte Aufgabe wird durch die Merkmale des Anspruchs gelöst.

Die wasserabweisende Masse stellt eine Lösung dar und weist eine siliziumorganische Verbindung und ein Lösungsmittel auf. Als siliziumorganische Verbindung weist die Masse gemäß der Erfindung wenigstens eine der folgenden Verbindungen auf: Polymethylhydrosiloxan, Polyethylhydrosiloxan, Polymethylsiloxan, Methyltriethoxysilan, Aminopropyltriethoxysilan und/oder wenigstens eine der folgenden Verbindungen: Natrium- oder Kalium-Methylsiliconat, Natrium- oder Kalium-Ethylsiliconat oder wenigstens eine der folgenden Verbindungen: Natrium- Alumomethylsiliconat, Natrium-Alumoethylsiliconat.

Gemäß der Erfindung weist die Masse zusätzlich einen Füllstoff und ein Lösungsmittel auf, wobei als Füllstoff nanodisperse Kieselerde- oder Tonerde-Pulver oder durch organische Verbindungen der monomerischen Alkylchlorosilane modifiziertes Kiesel-erde-Nanopulver verwendet ist. Als Lösungsmittel weist die beanspruchte Masse Wasser und/oder ein organisches Lösungsmittel der aliphatischen und aromatischen Kohlenwasserstoffgruppe auf. Dabei weist die Masse folgendes Komponentenverhältnis auf (Gew.%):

| | |
|---|---|
| siliziumorganische Verbindung | 0,05 - 35 |
| Füllstoff | 0,01 - 8,0 |
| Lösungsmittel | Rest bis 100. |

Die Verwendung einer der Verbindungen von Polymethylydrosiloxan, Polyethylhydrosiloxan, Polymethylsiloxan, Methyltriethoxysilan, Aminopropyltriethoxysilan als siliziumorganische Verbindung in dieser wasserabweisenden Masse sorgt für eine größere Anzahl der reaktiven Funktionsgruppen, welche infolge der chemischen Wechselwirkung von Hydrosilylier- und Silanolgruppen dieser Verbindungen mit oberflächlichen reaktiven Funktionsgruppen des Materials feste Bindungen untereinander bilden. Dabei wird die Schicht der chemosorbierten Komponenten verdichtet. Diese Wirkung stellt eine feste und dichte hydrophobe Schutzschicht auf der Metalloberfläche sicher.

Der Einsatz einer der Verbindungen von Natrium- oder Kalium-Methylsiliconat, Natrium- oder Kalium-Ethylsiliconat als siliziumorganische Verbindung in dieser wasserabweisenden Masse ermöglicht es, dank der chemischen Wechselwirkung zwischen den in diesen Verbindungen in großer Menge vorhandenen reaktiven Funktionsgruppen = Si-ONa und = Si-OK und den oberflächlichen reaktiven Funktionsgruppen des Materials feste Bindungen untereinander zu schaffen, so dass eine dichte chemosorbierte Komponentenschicht entsteht. Diese Schicht sorgt für eine hydrophobe, feste und dichte Schutzschicht auf der Materialoberfläche. Dank dieser Schutzschicht nimmt das Material weniger Salz-Wasserlösungen und andere aggressive Reagenzien auf. Darüber hinaus sind Durchlässigkeit und Porosität des Materials vermindert. Es ist möglich, die Dauerhaftigkeit des behandelten Materials, z. B. Beton, zu verbessern, indem die Materialoberfläche behandelt wird. Darüber hinaus sind die Haltbarkeit, die Korrosionsbeständigkeit und die Frostsicherheit erhöht. Das Einmischen von Natrium-Alumoalkylsilikaten macht es möglich, durch chemische Wechselwirkung von zahlreichen reaktiven Funktionsgruppen dieser Verbindungen = Si-ONa mit oberflächlichen reaktiven Funktionsgruppen des Materials feste Bindungen dazwischen zu erzeugen. Sie sorgen für eine feste hydrophobe Schutzschicht auf der Materialoberfläche.

Gleichzeitig hat Natrium-Alumoalkylsilikat eine mäßig ausgeprägte plastifizierende Wirkung. Dadurch ist es möglich, eine hydrophobe plastische Schutzschicht auf der Materialoberfläche zu erzeugen.

Gemäß der Erfindung ist die Massenzusammensetzung durch schwachsaures, nanodisperses Kieselerde- oder Tonerde-Pulver als Füllstoff ergänzt, und die Lösungen der Natrium- oder Kalium-Alkylsilikate sind ausreichend mit Wasser verdünnt. Dadurch geht die Alkalität der gelösten wasserabweisenden Masse beachtlich zurück. Folglich ist auch die Menge von hydrophilen Verbindungen verringert, und die Anzahl der reaktiven Funktionsgruppen der Komponenten der angemeldeten Masse nimmt zu. Dabei ist die Schicht der chemosorbierten Komponenten verdichtet und verstärkt.

Dank dem Einmischen des Füllstoffs in die wasserabweisende Masse weist sie ein durch organische Verbindungen der monomerischen Alkylchlorosilane modifiziertes Kieselerde-Nanopulver auf, wobei seine Teilchen in die undichte "lockere" Netz-Mosaik-Struktur eindringen und Polysiloxane bilden (aufgrund des Vorhandenseins von organischen Radikalen und des Einflusses von sterischen Faktoren). Infolge dieser Eindringung ist die Herstellung von einem dichten hydrophoben Schutzfilm auf der Oberfläche von Teilchen, Poren und Kapillaren des Materials sichergestellt. Das heißt, die Unhomogenität dieser Netz-Mosaik-Struktur ist beseitigt. Es ist eine leistungsstarke Wassersperre für Wassercluster und einzelne Wassermoleküle erzeugt. Das Vorhandensein von hydrophoben Teilchen, die durch organische Verbindungen der monomerischen Alkylchlorosilane der Kieselerde-Nanopulver modifiziert sind, trägt dazu bei, dass die hydrophoben Eigenschaften der wasserabweisenden Masse bei ihrer Verwendung noch mehr verstärkt sind. Es ist auch die Bindung zwischen den reaktiven Funktionsgruppen ihrer Komponenten und den reaktiven Funktionsgruppen des behandelten Materials (seinen Teilchen, Poren, Kapillaren usw.) dank der Verdichtung verstärkt. Die Schicht der chemosorbierten Komponenten der wasserabweisenden Masse bei ihrer Anwendung ist damit fester.

Der Einsatz von Wasser und/oder von einem organischen Lösungsmittel aus der aliphatischen und aromatischen Kohlenwasserstoffgruppe in der Zusammensetzung der angemeldeten wasserabweisenden Masse erlaubt es, optimale Mengen ihrer Komponenten bei Anwendungen im Kontakt mit unterschiedlichen Materialien zu wählen. Das heißt, dass die Möglichkeit einer beschleunigten Penetration (Eindringung) der wasserabweisenden Masse tief in die Materialoberfläche hinein unter Berücksichtigung der Oberflächenspannung der Lösungsmittel geschaffen ist. Das ermöglicht es, die Schicht von chemosorbierten Komponenten der wasserabweisenden Masse zu vergrößern und zu verstärken, denn diese Komponenten sorgen dafür, dass die Materialoberfläche im Endeffekt hohe hydrophobe Eigenschaften aufweist, die gleichzeitig auch noch beständiger sind.

Die erfindungsgemäße wasserabweisende Masse ist als eine homogene Zusammensetzung zubereitet, wobei die dosierten Mengen ihrer Komponenten gemischt werden. Die Zubereitung der wasserabweisenden Masse nimmt einige Stunden je nach Menge in Anspruch (im Gegensatz zu 36 bis 48 Stunden bei der bekannten Masse). Dabei entfallen energieintensive Schritte, welche eine Wärmebehandlung des Materials vorsehen. Diese Lösung vereinfacht und verbilligt die Herstellung der wasserabweisenden Masse. Die Verarbeitung der erfindungsgemäßen wasserabweisenden Masse ist ebenfalls vereinfacht und verbilligt, und zwar dadurch, dass die hydrophobe Schicht beachtlich schneller entsteht und dass keine zusätzliche Ausrüstung im Fertigungsprozess verwendet wird.

Das Wesen der Erfindung wird anhand von konkreten Beispielen erklärt.

Die Tabelle 1 zeigt Vergleichskenndaten der erfindungsgemäßen wasserabweisenden Masse und der bekannten wasserabweisenden Masse.

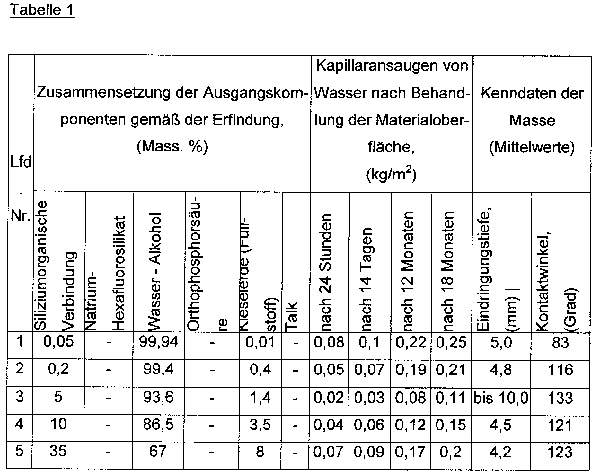

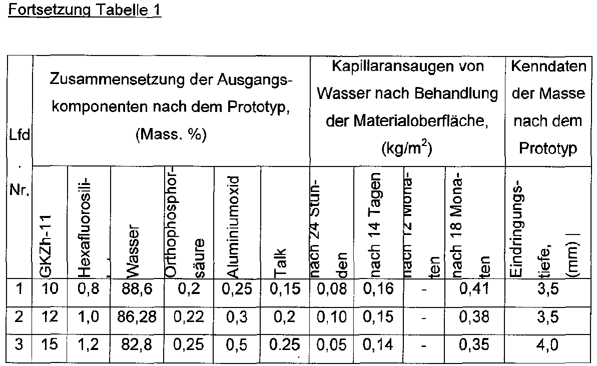

Aus der Tabelle 1 geht hervor, dass die wasserabweisende Masse nach der Erfindung folgende Vorteile gegenüber dem Prototyp aufweist. Nach der Behandlung des Materials saugt es viel weniger Wasser durch die Kapillaren ein, was auch durch Messungen nach 24 Stunden, 14 Tagen, 12 Monaten und 18 Monaten nachweisbar ist. Das heißt, dass die hydrophoben Eigenschaften der mit wasserabweisender Masse nach der Erfindung behandelten Materialien besser sind. Die Eindringungstiefe der neuen wasserabweisenden Masse ist wesentlich größer. Das ist auch durch die Vergrößerung der Schicht von chemosorbierten Komponenten in jeder der Zusammensetzungen der wasserabweisenden Masse bestätigt. Die angeführten Werte des Kontaktwinkels für jede der Zusammensetzungen der wasserabweisenden Masse zeugen ebenfalls von ihren hohen wasserabweisenden Eigenschaften. Die dritte Zusammensetzung der neuen wasserabweisenden Masse ist dabei als optimal zu betrachten.

Nachfolgend sind einige konkrete Beispiele für Betone mit hydrophoben Eigenschaften beschrieben. Diese Betone sind aus Betonmischungen unter Anwendung von bekannten wasserabweisenden Modifizierzusätzen hergestellt und sind mit dem Beton verglichen, welcher die neue wasserabweisende Masse als Zusatz aufweist.

### Beispiel 1

Um 1 Kubikmeter Beton mit hydrophoben Eigenschaften zu produzieren, wurde ein Betongemisch nach einer genormten Zusammensetzung zubereitet: 492 kg Zement (Zementart M400), 204 I Wasser, 1092 kg Granitschotter mit einer Korngröße von 5 - 10 mm und 600 kg Sand. Die Mischung wurde durch folgende Zusätze ergänzt: 1,5 kg Superplastifizierungsmittel S-3, Verdichter (NK) - 5 kg und 1 kg Hydrophobiermittel GKR-11K (Kalium- Methylsilikonat in Form von 30%iger alkoholisch-wässriger Lösung). Der Beton aus diesem Betongemisch hat folgende Eigenschaften: Expositionsklasse (Abdichtung des Betons) - W8, Frostsicherheit - F - 200, Verarbeitbarkeit - PO.

### Beispiel 2

Um 1 Kubikmeter Beton mit hydrophoben Eigenschaften zu bekommen, wurde ein Betongemisch nach einer genormten Zusammensetzung zubereitet: 320 kg Zement (Zementart M400), Wasser 160 l, 1200 kg Granitschotter mit einer Korngröße von 5-10 mm und Sand 850 kg. Es wurde auch ein Zusatz unter Anwendung der neuen wasserabweisenden Masse verwendet. Die Masse enthielt eine 30%ige alkoholischwässrige Lösung von Kalium-Ethylsiliconat (0,65 kg) und Kieselerde-Nanopulver (0,01 kg). Das Betongemisch wurde unter einfachem Vermischen der Komponenten homogenisiert. Der Beton aus diesem Betongemisch hat folgende Eigenschaften: Expositionsklasse - W10, Frostsicherheit - F - 400, Verarbeitbarkeit - P4.

### Beispiel 3

Der Beton wurde aus einem Betongemisch mit unveränderten Anteilen der Betongemischzutaten produziert, wobei die Menge der Komponenten der neuen wasserabweisenden Masse verdoppelt wurde. Dieser Beton hat eine bessere Betongüte, eine erhöhte Expositionsklasse und eine verbesserte Verarbeitbarkeit.

Diese Beispiele sind in Tabelle 2 zusammengefasst.

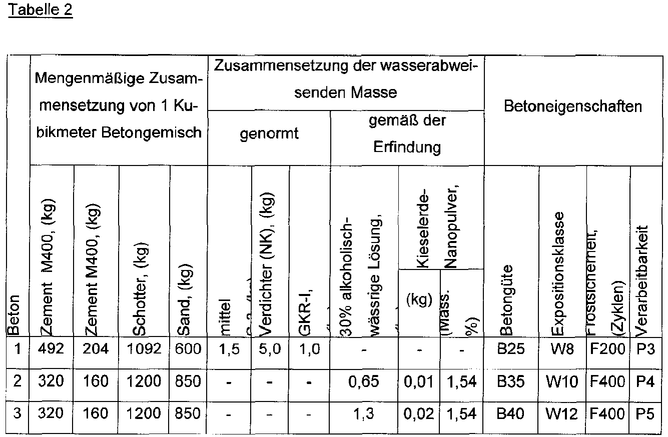

Aus der Tabelle 2 ist Folgendes ersichtlich: Bei der Herstellung von 1 m³ Betongemisch unter Anwendung der neuen wasserabweisenden Masse sinkt der M400-Zementverbrauch um 34,5 % und der Wasserverbrauch um 22 % gegenüber der Verwendung von bekannten wasserabweisenden Zusätzen. Geht der M400- Zementverbrauch zurück, so sinken auch die Kosten der Betonzubereitung. Darüber hinaus sind seine technischen Kenndaten verbessert: die Betongüte und die Expositionsklasse sind um 25 - 59 % verbessert, und die Frostsicherheit ist zweimal so groß wie üblich. Die Verarbeitbarkeit ist auch erhöht. Es ist auch zu bemerken, dass bei Anwendung der neuen wasserabweisenden Masse das Einmischen von einigen Zusätzen in das Betongemisch entfällt. Um einen hydrophoben Beton zu bekommen, ist gemäß der Erfindung nur ein Hydrophobiermittel zugesetzt, dessen Gewicht sechsmal kleiner ist. Die hydrophoben Eigenschaften des unter Einsatz der neuen wasserabweisenden Masse hergestellten Betons sind dagegen wesentlich verbessert. Das zeugt davon, dass die neue wasserabweisende Masse dem Material (Beton) bedeutend bessere hydrophobe Eigenschaften verleiht und dass das Betonherstellungsverfahren dabei beachtlich verbilligt und vereinfacht ist.

Darüber hinaus ist zu bemerken, dass die plastifizierende Wirkung von Beton gleichzeitig verbessert ist. Die Betonkonstruktionen brauchen nicht mehr alle 15 - 20 Minuten nach Einmischen der wasserabweisenden Masse mit Wasser begossen zu werden. Der Beton nimmt keine Feuchte mehr auf. Eine Nachbehandlung des Betons mit Dampf entfällt. Die Dauer der Sollfestigkeitsentwicklung des Betons verkürzt sich auf 6 - 7 Tage (gegenüber 10 - 14 Tage gemäß der bekannten Rezeptur). Die Schalung ist ebenfalls nicht mehr so lange benutzt, was für den gesamten Produktionsprozess von hoher Bedeutung ist.

Tabelle 3 enthält die Vergleichskenndaten von Beton, welcher unter Einsatz des bekannten Zusatzes Penetron und seiner Modifikation Padmix hergestellt ist, und Beton, welcher unter Einsatz der neuen wasserabweisenden Masse zur Betonoberflächenbehandlung sowie zur voluminösen Anwendung hergestellt ist. Die Tabelle enthält auch die Verbrauchsnormen der neuen wasserabweisenden Masse.

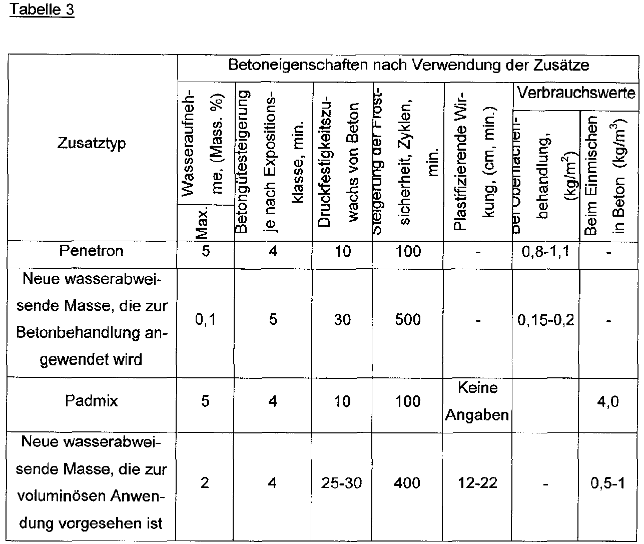

Aus der Tabelle 3 ist ersichtlich, dass bei Anwendung der neuen wasserabweisenden Masse zur Herstellung von Beton bzw. zur Betonoberflächenbeschichtung die Wasseraufsaugung bei Beton sinkt, die Betondruckfestigkeit um das 2,5- bis 3-fache steigt, seine Frostsicherheit 4mal höher ist und dass der Aufwand im Zusammenhang mit der Modifiziermittelzugabe wesentlich vermindert ist. Somit hat der unter Anwendung der neuen wasserabweisenden Masse produzierte Beton solche Eigenschaften, die seinen Einsatz als dauerhaftes und hochwertiges Baumaterial sowohl im industriellen als auch im Wohnbau sowie bei Deichbau, U-Bahnbau, Flughafenbau, Straßenbau durchaus möglich machen.

### Beispiel 4

Hydrophober Schutz von rotem Ziegel unter Anwendung der neuen wasserabweisenden Masse, z. B. mit folgender Zusammensetzung (Mass. %):

| | |
|---|---|
| Natrium-Ethylsiliconat | 29,5 |
| nanodisperses Kieselerde-Pulver | 1,6 |
| Wasser | Rest. |

Die wasserabweisende Masse wird in Form von 3- bis 5%iger Wasserlösung verarbeitet. Bei der Behandlung wurde die Ziegeloberfläche mit wasserabweisender Masse bedeckt und nachher getrocknet.

Dem roten Ziegel ist eine beachtliche - bis zu 90 % - Wasseraufnahme eigen. Deswegen kann das Wasser über eine solche Mauer bis auf 2 m Höhe steigen. Beim Nasswerden nimmt ihre Wärmeleitfähigkeit zu. Es entstehen Ausblühungen (Salzablagerungen) am Ziegel. Die Behandlung des roten Ziegels mit neuer wasserabweisender Masse verbessert wesentlich seine Gebrauchseigenschaften. Die Fähigkeit zum Kapillaransaugen von Wasser und Salz-Wasserlösungen ist so gut wie völlig beseitigt. Diese Hydrophobierung des roten Ziegels vermindert seine Verschmutzung unter Umweltbedingungen und hält seine ursprüngliche Farbe jahrelang aufrecht. Die Frostsicherheit ist wesentlich erhöht, während die Wasseraufnahme um das 12- bis 45-fache zurückgeht, wobei gleichzeitig die Wärmeschutzkenndaten des Ziegels verbessert sind.

In der Tabelle 4 sind Kenndaten für den mit neuer wasserabweisender Masse behandelten roten Ziegel im Vergleich zum unbehandelten Ziegel angeführt. Bei der Behandlung ist der Ziegel in die neue Masse getaucht worden.

**Tabelle 4**

| Roter Ziegel | Wasseraufnahme beim Eintauchen ins Wasser (Mass. %) | |
|---|---|---|
| | nach 15 Stunden | nach 50 Stunden |
| behandelt | 1,5 | 3,0 |
| unbehandelt | 18,0-23,9 | 19,7-26,1 |

Aus der Tabelle 4 kann man schließen, dass die Wasseraufnahmefähigkeit des mit der neuen wasserabweisenden Masse behandelten roten Ziegels 50 Stunden nach der Behandlung 6- bis 9-mal niedriger ist als die des unbehandelten Ziegels. Der Klimaschutz eines solchen Ziegels ist für bis zu 10 Jahre garantiert. Infolge der Hydrophobierung des roten Ziegels mit Hilfe der neuen wasserabweisenden Masse ist seine Lebensdauer viermal länger, und die Korrosionsbeständigkeit nimmt zu. Zugleich ist eine vorzeitige Zerstörung der Gebäude unter solchen Bedingungen wie 100%ige Feuchtigkeit und abwechselndes Einfrieren und Entfrosten im Vergleich zum unbehandelten Ziegelmauerwerk vermieden. Die Lebensdauer eines solchen Klimaschutzes beträgt 2 bis 2,5 Jahre.

### Beispiel 5 Hydrophober Schutz von Gipserzeugnissen

Gipserzeugnisse zeichnen sich durch eine erhöhte Wasseraufnahmefähigkeit aus. Der Hauptgrund der geringen Wasserbeständigkeit von Gips ist seine Wasserlöslichkeit und seine hohe Porosität. Nach einem Verweilen im Wasser sinkt die Gipsfestigkeit auf nur 45 %. Die geräuschdämpfende Wirkung lässt ebenfalls nach.

Die Tabelle 5 enthält Angaben über die Gipseigenschaften nach seiner Oberflächenbehandlung mit der neuen wasserabweisenden Masse, z. B. mit folgender Zusammensetzung (Mass. %):

| | |
|---|---|
| Polyethylhydrosiloxan | 5,0 |
| Polymethylsiloxan | 1,0 |
| Methyltriethoxysilan | 1,15 |
| Aminopropyltriethoxysilan | 2,5 |
| Kieselerde-Nanopulver, modifiziert durch organische | |
| Verbindungen aus der Reihe der monomerischen | |
| Alkylchlorosilane | 0,5 |
| Lösemittel | Rest bis 100 |

im Vergleich zur unbehandelten Gipsoberfläche.

Die Prüfungen wurden 100 Stunden lang bei einer Temperatur von 18 - 20 °C und 100%iger Feuchtigkeit durchgeführt.

**Tabelle 5**

| Gipsoberfläche | Wasseraufnahmevermögen von Gips (Mass. %) | |
|---|---|---|
| | ein Monat nach Herstellung | vier Monate nach Herstellung |
| behandelt | 0,07 | 0,1 |
| unbehandelt | 0,86 | 1,10 |

Aus der Tabelle 5 geht Folgendes hervor: Bei einer Behandlung von Gips mit der neuen wasserabweisenden Masse geht sein Wasseraufnahmevermögen einen Monat später um fast 10- bis 12-mal zurück. Dieses Verhältnis bleibt auch vier Monate später erhalten. Die Wetterbeständigkeit der Gipsplattenoberfläche nimmt wesentlich zu.

### Beispiel 6

Die erfindungsgemäßen wasserabweisenden Massen mit Natrium- oder Kalium-Ethylsiliconat wurden auch zur Putzhydrophobierung verwendet. Die genannten Komponenten sind in den Mengen gemäß der beanspruchten Zusammensetzung genommen (Mass. %):

| | |
|---|---|
| 1) Natrium-Ethylsiliconat | 29,6 |
| nanodisperses Kieselerde-Pulver | 1,7 |
| Wasser | Rest bis 100 |
| | |
| 2) Kalium-Ethylsiliconat | 29,6 |
| nanodisperses Tonerdepulver | 1,9 |
| Wasser | Rest bis 100. |

Die Putzhydrophobierung wurde in zwei Schritten durchgeführt: - Das Putzgemisch mit Zement und Sand im Verhältnis 1 : 3 wurde mit 0,25- bis 0,3%iger Wasserlösung einer der oben genannten Zusammensetzungen der wasserabweisenden Masse ergänzt. Diese Putzlösung ist auf eine vorher wasserbenetzte Wandoberfläche wie üblich aufgetragen. Der Zusatz von wasserabweisender Masse beschleunigt die Putztrocknung um das Zweifache, erhöht Wasserabstoßungsfähigkeit und Reibfestigkeit um 25 - 30 %, verhindert Ausblühungen (Salzablagerungen) im Gebäude und außerhalb. Der hydrophobe Putz kann mit beliebigen Wasser- und Nicht-Wasserfarben bedeckt werden.

- Die fertige Putzoberfläche wurde mit einer 5%igen Lösung einer der oben genannten wasserabweisenden Masse bedeckt. Dabei entsteht auf der Putzoberfläche eine unlösliche wasserabstoßende jedoch luftdurchlässige Schicht.

Der Verbrauch der wasserabweisenden Lösung bei der Oberflächenhydrophobierung beträgt im Durchschnitt 200 - 250 ml pro 1 Quadratmeter Oberfläche. Die Eindringungstiefe der 5%igen Lösung der wasserabweisenden Masse erreicht 10 mm. Die mit den wasserabweisenden Massen mit den angeführten Zusammensetzungen behandelte Putzoberfläche ist nicht mehr fähig, Wasser durch Kapillaren anzusaugen und mit Wasser benetzt zu werden. Dabei ist zu bemerken, dass jede der oben genannten wasserabweisenden Massen einem neutralen Medium nahe ist (pH 7 - 8). Das trägt zur Verstärkung der Bindungen zwischen den reaktiven Funktionsgruppen der Massekomponenten und den reaktiven Funktionsgruppen von dem Putz bei. Die wasserabweisenden Massen mit pH 7 - 8 können auch zur Behandlung anderer Materialien (Beton, Ziegel, Leder, Papier, Webstoffe u. a. m.) angewendet werden, so dass dabei ihre optimalen Gebrauchswerte sichergestellt werden.

### Beispiel 7

Die wasserabweisende Masse wurde zur Hydrophobierung von Gipsoberflächen verwendet. Das Zutatenverhältnis entspricht der neuen Mengenzusammensetzung (Gew.%):

| | |
|---|---|
| Natrium-Alumomethylsiliconat | 29,57 |
| nanodisperses Kieselerde-Pulver | 1,8 |
| Wasser | Rest bis 100. |

Nach der Behandlung der Gipsplattenoberfläche mit einer 4- bis 5%igen Lösung einer solchen wasserabweisenden Masse mit Natrium-Alumomethylsiliconat ist die Wasseraufnahme der Gipsplattenoberfläche 15- bis 20-mal niedriger. Dabei beträgt der Verbrauch der 4- bis 5%igen Lösung der wasserabweisenden Masse 230 bis 250 ml/m². Einen Monat nach der Behandlung und dem Halten im Laufe von 100 Stunden bei 100%iger Feuchtigkeit und einer Temperatur von 20 °C beträgt die Wasseraufnahmefähigkeit der Gipsplattenoberfläche 0,5 % und 5 Monate nach der Behandlung 0,65 % ohne Ausblühungen.

### Beispiel 8

Zur Hydrophobierung der Kalksteinoberfläche wurde wasserabweisende Masse eingesetzt, deren Zusammensetzung dem Mengenbereich nach der Erfindung entspricht (Mass. %):

| | |
|---|---|
| Natrium-Alumoethylsiliconat | 32,5 |
| nanodisperses Kieselerde-Pulver | 1,75 |
| Wasser | Rest bis 100. |

Die Oberfläche von Kalksteinplatten wurde mit 4 - 5%iger Lösung dieser wasserabweisenden Masse auf der Basis von Natrium-Alumoethylsiliconat behandelt. Dabei betrug der Verbrauch der 4 - 5%igen Lösung der wasserabweisenden Masse 230 - 250 ml/m². Die Bindungsfestigkeit zwischen der wasserabweisenden Beschichtung und der Oberfläche der Kalksteinplatten stellt den Ablauf einer chemischen Reaktion sicher, bei der Na-Ionen durch Ca-Ionen ersetzt werden. Infolge dieser Substitutionsreaktion entsteht eine neue Oberflächenverbindung Kalzium-Alumoethylsiliconat. Das ergibt einen beständigen Oberflächenschutz des behandelten Kalksteins. Diese Zusammensetzung der wasserabweisenden Masse ermöglicht auch eine wirksame Behandlung von beliebigen hydrophilen Materialien (Beton, Ziegel, Leder, Papier, Webstoffe usw.).

### Beispiel 9 Hydrophober Lederschutz

Bei der Lederbehandlung sollte die chemische Zusammensetzung in verschiedenen Behandlungsschritten sowie während der Vorbereitung auf Hydrophobierung berücksichtigt werden. Die Grundschicht des Leders ist die Dermis. Sie besteht aus dem Protein Kollagen, Fettstoffen und kleinen Mengen von Mineralsalzen. In der verfahrenstechnischen Praxis wirkt eine beliebige wasserabweisende Masse mit Kollagenkomplex und mit dem damit gebundenen Gerbmittel zusammen. Dabei bleibt ein Teil der Kollagenmoleküle frei. Es handelt sich dabei um die Moleküle, die mit den Gerbmittelverbindungen nicht reagiert haben. Dieser Teil der freien Kollagenmoleküle enthält reaktive Funktionsgruppen (Hydroxi-, Amino-, Carboxy- und andere Gruppen). Diese sind dazu fähig, mit den reaktiven Funktionsgruppen der wasserabweisenden Masse zusammenzuwirken.

Die Lederhydrophobierung ist erreicht, indem fertige Ledererzeugnisse in einer Lösung der wasserabweisenden Masse eingetaucht oder einer Oberflächenbehandlung damit unterzogen wurden. Die Beschichtung von Lederwaren sollte einer ganzen Reihe von Anforderungen Rechnung tragen. Dazu zählen Wasser-, Licht-, Wärmebeständigkeit, Frostsicherheit, Lösungsmittelbeständigkeit, Reibungsfestigkeit, Stoßfestigkeit, Dauerbiege-, Druck- und Zugbeständigkeit sowie hygienische Anforderungen, darunter auch Luft- und Dampfbeständigkeit. Die Qualität der Lederhydrophobierung hängt von der jeweiligen Art der Ledererzeugnisse und davon ab, dass während des Färbens unterschiedliche filmbildende Mittel verwendet werden und zwar: Polyacrylate, Polybutadiene, Schießbaumwolle, Polyurethankunststoffe, Proteinbeschichtungen. Meistens werden Kombinationen von mehreren filmbildenden Mitteln als Bestandteile der Deckfarben verwendet.

Die Tabelle 6 weist Kenndaten für ein mit der neuen wasserabweisenden Masse behandeltes Leder im Vergleich mit dem unbehandelten Leder aus. Diese Masse kann z. B. folgende Zusammensetzung haben (Mass. %):

| | |
|---|---|
| Polymethylhydrosiloxan | 8,0 |
| Polymethylsiloxan | 1,2 |
| Methyltriethoxysilan | 1,2 |
| Aminopropyltriethoxysilan | 0,5 |
| Kieselerde-Nanopulver, modifiziert durch organische | |
| Verbindungen der monomerischen Alkylchlorosilane | 0,4 |
| Terpentin | Rest bis 100. |

**Tabelle 6**

| Lederart | Wasseraufnahme von Gips (Mass. %) | |
|---|---|---|
| | unbehandelt | behandelt |
| Ballleder | 85 | 11,5 |
| Chromgares Schweinsleder | 22,1 | 4,0 |

Zur Hydrophobierung von Leder kann die wasserabweisende Masse nach der Erfindung mit einer Lösungskonzentration von 1 - 10 % benutzt werden. Die Wärmebehandlung von Leder im Laufe von einigen Stunden bei einer Temperatur von 60 bis 65 °C vermindert seine Wasseraufnahme um das 5- bis 8-fache im Vergleich zu unbehandelten Proben, wobei seine hygienischen Eigenschaften und die Nassreibechtheit erhalten bleiben. Forschungen von zahlreichen Lederarten haben ergeben, dass die Wasseraufnahmefähigkeit von Leder nach seiner Behandlung mit der neuen wasserabweisenden Masse je nach einer Vorbehandlung des Leders 30- bis 45-mal kleiner wird. Das durch organische Verbindungen der monomerischen Alkylchlorosilane modifizierte Kieselerde-Nanopulver als Bestandteil der wasserabweisenden Masse deckt zusätzlich Lederporen ab und erhöht die Wasserabstoßungsfähigkeit des Leders. Die Behandlung mit der neuen wasserabweisenden Masse macht das Leder hoch wasserbeständig, was der chemischen Bindung zwischen den reaktiven Funktionsgruppen der Komponenten der wasserabweisenden Masse mit dem Lederkollagen zu verdanken ist.

### Beispiel 10 Hydrophober Papierschutz

Das behandelte Papier bekommt nach der Hydrophobierung mit der neuen wasserabweisenden Masse gute hydrophobe Eigenschaften im Vergleich zum unbehandelten Papier. Die wasserabweisende Masse kann z. B. mit folgender Zusammensetzung und mit folgendem Mengenverhältnis verwendet werden (Mass. %):

| | |
|---|---|
| Polymethylhydrosiloxan | 8,0 |
| Aminopropyltriethoxysilan | 0,5 |
| Kieselerde-Nanopulver, modifiziert durch organische | |
| Verbindungen der monomerischen Alkylchlorosilane | 0,4 |
| Ethylzellosolv | Rest bis 100. |

Während der Papierbehandlung wurde es mit der neuen wasserabweisenden Masse durchtränkt. Das Papier bekam hydrophobe und gleichzeitig Antiklebeeigenschaften. Dabei ist die Papierfestigkeit 3- bis 4-mal höher. Gleichzeitig geht die Wasseraufnahme um das 2- bis 2,5-fache zurück. Darüber hinaus ist das Papier gegen lineare Querdehnungen beständig. Eine solche Papierbehandlung wird zur Hydrophobierung von Zeichenpapier, topografischen Karten, Wertpapieren, Tapeten usw. verwendet.

### Beispiel 11

Um Webstoffen wasserabstoßende Eigenschaften zu verleihen, wurden diese mit der neuen wasserabweisenden Masse durchtränkt, deren Zutaten in einem Verhältnis gemäß dem angemeldeten Mengenbereich genommen sind (Mass. %):

| | |
|---|---|
| Polyethylhydrosiloxan | 5 |
| Aminopropyltriethoxysilan | 0,25 |
| Kieselerde-Nanopulver, modifiziert durch organische | |
| Verbindungen der monomerischen Alkylchlorosilane | 0,2 |
| Wasser | Rest bis 100. |

Die Webstoffe aus Mischfasern behalten ihre hohen hydrophoben Eigenschaften längere Zeit nach der Behandlung mit der beanspruchten wasserabweisenden Masse bei.

Die Eigenschaften der Webstoffe aus Mischfasern nach der Behandlung mit der wasserabweisenden Masse in oben genannter Zusammensetzung sind der Tabelle 7 zu entnehmen.

**Tabelle 7**

| Webstoff | Wasseraufnahme pro 1 Min., (%) | | | Wasserbeständigkeit, kPa (mm Hg) | |
|---|---|---|---|---|---|
| | Ohne Behandlung | Nach Behandlung | Nach chemischer Reinigung | Ohne Behandlung | Nach Behandlung |
| Lavsan-Wolle (Art. 93198) | 21,0 | 10,2 | 9,5 | 0,6 (62) | 1,2 (119) |

### Beispiel 12

Zur Behandlung von Webstoffen aus Baumwolle, Wolle, Seide sowie von Synthesefasergewebe wurde eine wasserabweisende Masse verwendet, deren Zutaten in einem Verhältnis gemäß dem angemeldeten Mengenbereich genommen wurden (Mass. %):

| | |
|---|---|
| Polymethylhydrosiloxan | 5 |
| Aminopropyltriethoxysilan | 0,25 |
| Kieselerde-Nanopulver, modifiziert durch organische | |
| Verbindungen der monomerischen Alkylchlorosilane | 0,2 |
| Wasser | Rest bis 100 |

Die Behandlung der Webstoffe mit der wasserabweisenden Masse der genannten Zusammensetzung verleiht den Webstoffen gute wasserabstoßende Eigenschaften, welche nach der chemischen Reinigung, nach dem Waschen sowie bei atmosphärischen Wirkungen erhalten bleiben. Die Behandlung der Webstoffe mit der oben beschriebenen Zusammensetzung der wasserabweisenden Masse kann mit einer Behandlung mit verschiedenen organischen Harzen kombiniert werden, welche den Webstoffen auch weitere nutzvolle Eigenschaften verleihen, z. B. Knitterbeständigkeit und erhöhte Festigkeit.

Als Lösungsmittel wird in einer solchen wasserabweisenden Masse Wasser verwendet. Das Wasser ermöglicht, die Anwendung von explosionsgefährdeten und giftigen Lösungsmitteln zu vermeiden. Bei Textilwaren wird eine Hydrophobierung während der Fertigstellung vorgenommen. Dabei bekommen die Webstoffe zuverlässige wasserabstoßende Eigenschaften, welche auch nach der chemischen Reinigung, dem Waschen und den atmosphärischen Wirkungen erhalten bleiben.

Die Webstoffe gewinnen sanften Griff, gute Hydrophobizität und erhöhte Festigkeit. Bei Steifleinen zählen dazu auch noch eine Wasser- und Fäulnisbeständigkeit. Alle textilphysikalischen Werte bleiben dabei erhalten.

Die oben beschriebenen Anwendungsbeispiele der erfindungsgemäßen wasserabweisenden Masse zeugen davon, dass diese Masse ein plastifizierendes Mittel darstellt und dafür vorgesehen ist, die technischen Kenndaten und das Verfahren zur Herstellung von Baustoffen und anderen zementhaltigen Materialien zu verbessern. Zu diesem Zweck wird die Masse den genannten Materialien sowohl während ihrer Zubereitung als auch während der Oberflächenbehandlung von verschiedenen porösen Materialien (Beton, Leder, Papier, Putz, Ziegel, Holz, Schiefer usw.) zugesetzt. Das wird mittels einer bis zu 10 mm tiefen Imprägnierung erreicht. Dabei entsteht ein fester wasserabstoßender Schutzfilm. Die neue wasserabweisende Masse wird auch als umweltfreundliches Modifiziermittel verwendet, da sie keine giftigen Verbindungen, Schwermetalle usw. enthält. Sie kann überall da verwendet werden, wo ein Schutz gegen schädliche und aggressive Umwelteinwirkungen sowie wasserabstoßende Eigenschaften der Oberflächen gefragt sind, z. B. Flugplatzdecken, Straßendecken, Gerüstbrückungen, Überführungen (Unterführungen), Pflasterplatten, Brücken, Dämme, Anlegeplätze, Docks, Tunnels, Abwasserkanäle, Irrigationsanlagen, Fundamente, Elevatoren, Brunnenanlagen und Trinkwasserbehälter, Schwimmbecken, Keller, Erdgeschosse usw.

## Patentansprüche

1. Wasserabweisende Masse in Form einer Lösung mit einer siliziumorganischen Verbindung und einem Lösungsmittel,
**dadurch gekennzeichnet,**
**dass** sie wenigstens eine der folgenden Verbindungen - Polymethylhydrosiloxan, Polyethylhydrosiloxan, Polymethylsiloxan, Methyltriethoxysilan, Aminopropyltriethoxysilan und/oder wenigstens eine der folgenden Verbindungen - Natrium- oder Kalium-Methylsiliconat, Natrium- oder Kalium-Ethylsiliconat oder wenigstens eine der folgenden Verbindungen - Natrium-Alumomethylsiliconat, Natrium-Alumoethylsiliconat als siliziumorganische Verbindung aufweist,
**dass** sie zusätzlich nanodisperses Kieselerde- oder Tonerde-Pulver oder durch organische Verbindungen der monomerischen Alkylchlorosilane modifiziertes Kieselerde-Nanopulver als Füllstoff und Wasser und/oder organisches Lösungsmittel der aliphatischen und aromatischen Kohlenwasserstoffgruppe als Lösungsmittel aufweist und
**dass** die Masse folgendes Komponentenverhältnis aufweist (Mass. %):
| | |
|---|---|
| siliziumorganische Verbindung | 0,05 - 35 |
| Füllstoff | 0,01 - 8,0 |
| Lösungsmittel | Rest bis 100. |
